# EUROPEAN PATENT APPLICATION

(11) **EP 1 564 832 A1**
(43) Date of publication of application: **17.08.2005**
(21) Application number: 04006038.6
(22) Date of filing: 13.03.2004
(51) Int. Cl.: H01M 10/40

(54) **A non-aqueous electrolyte for a rechargeable electrochemical cell and non-aqueous electrolyte rechargeable electrochemical cell**

(30) Priority: 13.02.2004 EP 04003250
(71) Applicant: PAUL SCHERRER INSTITUT, 5232 Villigen PSI (CH)
(72) Inventor: Vetter, Jens, Dr., 5303 Würenlingen (CH); Novak, Petr, Dr., 5200 Brugg (DE); Buqa, Hilmi, Dr., 5200 Brugg (CH); Peter, Sandra, 5737 Menziken (CH)
(74) Representative: Fischer, Michael, Dr.

(57) **Abstract**

It is the aim of the present invention to retain the benefits of a lithium ion cell capable of operating at temperatures down to as low as about -40°C while minimizing the permanent cycle capacity loss under the circumstance of establishing the first cycle irreversible capacity loss at a tolerable level.

This aim is achieved by a non-aqueous electrolyte for a rechargeable electrochemical cell, comprising
a) a film forming organic component;
b) an alkali metal salt; and
c) as an additive a nitrogen-containing hetero-aromate and/or its derivatives and/or mixtures thereof; and/or
d) as an additive a compound selected from a group containing aniline, pyrrole, 2-methyl-1-pyrroline, 1-methylpyrroline and 1-vinyle-2-pyrrolidine.

Surprisingly, these additives have the properties of supporting the immediate generation of superior solid electrolyte interphases on the carbon/graphite anode in order to suppress its exfoliation when propylene carbonate is used as a main organic compound. Depending on the choice for the anode material which significantly has an impact on the irreversible first cycle capacity loss, an electrochemical cell equipped with this electrolyte maintains its capacity over a comparably high number of charge/discharge cycles with capacity losses far below 0.5% per cycle.

## Description

The invention relates to a non-aqueous electrolyte for a rechargeable electrochemical cell. Further, the invention relates to a non-aqueous electrolyte rechargeable electrochemical cell.

Alkali metal rechargeable cells (named also alkali ion cells) such as the cell disclosed in the European patent application EP 1 215 746 typically comprise a carbonaceous anode electrode and a lithiated cathode electrode. Due to the high potential of the cathode material (up to 4.3 V vs. Li/Li⁺ for Li₁₋ₓCoO₂) and the low potential of the carbonaceous anode material (0.01 V vs. Li/Li⁺ for graphite) in a fully charged lithium ion cell, the choice of the electrolyte solvent system is limited. Since carbonate solvents have high oxidative stability toward typically used lithiated cathode materials and good kinetic stability toward carbonaceous anode materials, they are generally used in lithium ion cell electrolytes. To achieve optimum cell performance (high rate capability and long cycle life), solvent systems containing a mixture of a cyclic carbonate (high dielectric constant solvent) and a linear carbonate (low viscosity solvent) are typically used in commercial secondary cells. Cells with carbonate based electrolytes are known to deliver more than 1,000 charge/discharge cycles at room temperature.

A typical electrolyte involves the provision of ethylene carbonate (EC), dimethyl carbonate (DMC), ethyl methyl carbonate (EMC) and/or diethyl carbonate (DEC) as the solvent system for the activating electrolyte. However, lithium ion cell design generally involves a trade off in one area for a necessary improvement in another, depending on the targeted cell application. The achievement of a lithium-ion cell capable of low temperature cycleability by use of, e.g., the quaternary solvent electrolyte 1.0 M LiPF₆/EC:DMC:EMC:DEC = 45:22:24.8:8.2 (as described in EP 1 215 746), in place of a typically used binary solvent electrolyte (such as 1.0 M LiPF₆/EC:DMC = 30:70, v/v which freezes at -11°C), is obtained at the expense of increased first cycle irreversible capacity during the initial charging (approximately 65 mAh/g graphite for 1.0 M LiPF₆/EC:DMC:EMC:DEC = 45:22:24.8:8.2 vs. 35 mAh/g graphite for 1.0 M LiPF₆/EC:DMC = 30:70).

Due to the existence of this first cycle irreversible capacity, lithium ion cells are generally cathode limited. Since all of the lithium ions, which shuttle between the anode and the cathode during charging and discharging originally come from the lithiated cathode, the larger the first cycle irreversible capacity, the lower the cell capacity in subsequent cycles and the lower the cell efficiency. Thus, it is desirable to minimize or even eliminate the first cycle irreversible capacity in lithium ion cells while at the same time maintaining the low temperature cycling capability of such cells.

Therefore, it is commonly known that when an electrical potential is initially applied to lithium ion cells constructed with a carbon anode in a discharged condition to charge the cell, some permanent capacity loss occurs due to the anode surface passivation film formation. This permanent capacity loss is called first cycle irreversible capacity. The film formation process, however, is highly dependent on the reactivity of the electrolyte components at the cell charging potentials. The electrochemical properties of the passivation film are also dependent on the chemical composition of the surface film.

The formation of a surface film is unavoidable for alkali metal systems, and in particular, lithium metal anodes and lithium intercalated carbon anodes due to the relatively low potential and high reactivity of lithium toward organic electrolytes. The surface film, known as the solid-electrolyte interphase (SEI), ideally should be electronically insulating and ionically conducting. While most alkali metal, alkali ion, and in particular, lithium (ion) electrochemical systems comprising one of several known electrolytes meet the first requirement, the second requirement is difficult to achieve. The resistance of these films is not negligible, and as a result, impedance builds up inside the cell due to this surface layer formation which induces unacceptable polarization during the charge and discharge of the lithium ion cell, especially at low temperature. On the other hand, if the SEI film is electronically conductive, the electrolyte decomposition reaction on the anode surface does not stop due to the low potential of the lithiated carbon electrode.

Long term stability of the SEI film is another issue. If electrolyte components are able to penetrate through the SEI film, a constant loss of usable capacity, known as fading, occurs, limiting the life-time of the electrochemical system.

Hence, the composition of the electrolyte has a significant influence on the charge/discharge efficiency of alkali metal systems, and particularly both the first irreversible capacity loss and subsequent permanent capacity loss in secondary cells. For example, when 1.0 M LiPF₆/EC:DMC = 30:70 is used to activate a secondary cell, the first cycle irreversible capacity is approximately 35 mAh/g of graphite. However, under the same cycling conditions, the first cycle irreversible capacity is found to be approximately 65 mAh/g of graphite when 1.0 M LiPF₆/EC:DMC:EMC:DEC = 45:22:24.8:8.2 is used as the electrolyte. In contrast, lithium ion cells activated with the binary solvent electrolyte of ethylene carbonate and dimethyl carbonate cannot be cycled at temperatures less than about -11°C. The quaternary solvent electrolyte of EC, DMC, EMC and DEC, which enables lithium ion cells to cycle at much lower temperatures, is a compromise in terms of providing a wider temperature application with acceptable cycling efficiencies.

According to EP 1 215 746, these objectives are achieved by adding a carbonate additive in the above described quaternary solvent electrolytes. In addition, this invention may be generalized to other nonaqueous organic electrolyte systems, such as binary solvent and ternary solvent systems, as well as the electrolyte systems containing solvents other than mixtures of linear or cyclic carbonates. For example, linear or cyclic ethers or esters may also be included as electrolyte components. Although the exact reason for the observed improvement is not clear, it is hypothesized that the carbonate additive competes with the existing electrolyte components to react on the carbon anode surface during initial lithiation to form a beneficial SEI film. The thusly formed SEI film is electronically more insulating than the film formed without the carbonate additive and, as a consequence, the lithiated carbon electrode is better protected from reactions with other electrolyte components. Therefore, lower first cycle irreversible capacity is obtained.

Unfortunately, even the cell comprising this type of improved electrolyte shows a non-negligible permanent capacity loss which is distressing since these losses occur significantly in the subsequent cycles following the first irreversible cycle loss event.

Therefore, it is the aim of the present invention to retain the benefits of a lithium ion cell capable of operating at temperatures down to as low as about -40°C while minimizing the permanent cycle capacity loss under the circumstance to establish the first cycle irreversible capacity loss at a tolerable level.

This aim is achieved according to the present invention by a non-aqueous electrolyte for a rechargeable electrochemical cell, comprising
a) a film forming organic component;
b) an alkali metal salt; and
c) as additive a nitrogen-containing hetero-aromate and/or its derivatives and/or mixtures thereof.

Alternatively or additionally, this aim is achieved according to the present invention by a non-aqueous electrolyte for a rechargeable electrochemical cell, comprising
a) a film forming organic component;
b) an alkali metal salt; and
c) as additive a compound selected from a group containing aniline, pyrrole, 2-methyl-1-pyrroline, 1-methylpyrrolidine and 1-vinyle-2-pyrrolidine and/or mixtures thereof.

Surprisingly, these additives have the properties of causing and/or supporting the immediate generation of superior solid electrolyte interphases on the carbon/graphite anode in order to suppress its exfoliation, in particular when propylene carbonate is used as the main electrolyte component. Depending on the choice for the anode material which significantly has an impact on the irreversible first cycle capacity loss, an electrochemical cell equipped with this electrolyte maintains its capacity over a comparably high number of charge/discharge cycles with capacity losses typically far below 0.5% per cycle.

With respect to an advanced covering of the anode with the SEI, the film forming organic component may be selected from a group containing 1,2-dimethoxyethane, 2-methyl-tetrahydrofuran, ethylene carbonate, propylene carbonate, butylene carbonate, gamma-butyro lactone, methyl propionate and methyl lactate.

In order to design the desired broad range of operating temperatures what in detail implies to design a proper viscosity for enhanced conductivity, beside the film forming organic component an organic co-solvent is comprised selected from a group containing acyclic organic carbonates, such as dimethyl carbonate, ethyl methyl carbonate, diethyl carbonate, methyl propyl carbonate, butyl methyl carbonate and its isomers, and others, or mixtures thereof.

Suitable alkali metal salts are selected from a group containing LiPF₆, LiClO₄, LiAsF₆, LiBF₄, LiCF₃SO₃, LiN(CF₃SO₂)₂, LiSbF₆, LiAlCl₄, LiGaCl₄, LiNO₃, LiSCN, LiO₃SCF₂CF₃, LiC₆F₅SO₃, LiO₂CCF₃, LiFSO₃, LiB(C₆H₅)₄, LiB(C₂O₄)₂, and lithium fluoroalkyl-phosphates, and others, or mixtures thereof. Suitable salt concentrations typically range between 0.1 molar and the physical solubility limits, preferably about 0.5 to 2 molar.

Suitable additives from the nitrogen-containing aromate type and/or its derivatives can be selected from a group containing pyridine, 2-picoline, 3-picoline, 4-picoline, 2-vinylpyridine, 4-vinylpyridine, and dimethylamino-pyridine (DMAP) and borane-pyridine-complex and, of course, mixtures thereof. Thereby, the amount of the additive may range between about 0.05 to 10 vol%.

Superior electrolyte composition may comprise 20 to 70 vol% of ethylene carbonate and/or 20 to 70 vol% of dimethyl carbonate, lithium-hexafluorophosphate in the range of 0.5 to 2 mol/l, and 0.1 to 2.5 vol% of an additive, preferably 1 vol% 2-picoline.

Another superior electrolyte composition may comprise propylene carbonate, lithium-hexafluorophosphate in the range of 0.5 to 2 mol/l, and 0.2 to 5 vol% of an additive, preferably 2 vol% pyridine. This electrolyte overcomes a preconception known in the art insofar as the prior art teaches that the use of propylene carbonate without an additional content of a film forming component inevitably leads to the exfoliation of the graphite anode. This exclusion is completely diametrally opposed against the existing request that the use of propylene carbonate would be highly appreciated due to its superior low and high temperature behaviour and to the desired use of un-expensive high-crystalline natural or synthetic graphites, which are by about a factor 5 to 10 cheaper than carbons typically used in recent cell production.

Subsequently, an inventive non-aqueous electrolyte rechargeable electrochemical cell, such as an alkali metal ion accumulator, will comprise an anode, a cathode and an electrolyte,
a) said anode comprises a carbonaceous electrode;
b) said cathode comprises an electrode material containing alkali metal ions and/or being able to accommodate alkali metal ions; and
c) said electrolyte having a composition according to any of the subsequent claims 1 to 10.

Examples of the invention are described in detail according to the drawings which show in a combined manner the cycling behaviour of distinct electrolyte compositions comprising the additives according to the present invention. For a person skilled in the art it is apparent that various variations and modifications are within the scope of the present invention.

Fig. 1 to 21 show the cycling behaviour for twenty-one different compositions of the electrolyte and eventually different anode and cathode materials.

Fig. 22 shows a comparison of the first cycles of three cells (no. 1, 2 , and 5) .

The tables 1 and 2 below give an overview over the specific cell parameters of the 21 cells considered hereafter:

**Table 1:**

| Specifications of graphite materials used | | |
|---|---|---|
| **Graphite** | **BET [m**^{**2**}**/g]** | **d**_{**90**} **[µm]** |
| A | 2 | 40 |
| B | 20 | 6 |
| C | 4.2 | 50.3 |
| D | 17 | 6.22 |

**Table 2:**

| Specific cell parameters | | | | |
|---|---|---|---|---|
| **No.** | **Graphite electrode** | **Counter electrode** | **Electrolyte** | **Additive** |
| 1 | A | Li | EC/DMC 1:1 , 1M LiPF₆ | --- |
| 2 | A | Li | EC/DMC 1:1 , 1M LiPF₆ | Pyridine, 0.5 % |
| 3 | A + B (10:1) | Li | EC/DMC 1:1 , 1M LiPF₆ | --- |
| 4 | A + B (10:1) | Li | EC/DMC 1:1 , 1M LiPF₆ | Pyridine, 1.0 % |
| 5 | A + B (10:1) | Li | EC/DMC 1:1 , 1M LiPF₆ | 2-Picoline 1.0 % |
| 6 | A + B (10:1) | Li | EC/DMC 1:1 , 1M LiPF₆ | 3-Picoline 1.0 % |
| 7 | A + B (10:1) | Li | EC/DMC 1:1 , 1M LiPF₆ | 2-Vinylpyridine 0.2 % |
| 8 | A + B (10:1) | Li | EC/DMC 1:1 , 1M LiPF₆ | 4-Vinylpyridine 1.0 % |
| 9 | A + B (10:1) | Li | EC/DMC 1:1 , 1M LiPF₆ | 4-Vinylpyridine 0.2 % |
| 10 | A + B (10:1) | Li | EC/DMC 1:1 , 1M LiPF₆ | Pyrrole 0.2 % |
| 11 | A + B (10:1) | Li | EC/DMC 1:1 , 1M LiPF₆ | 2-Methyl-1-pyrroline 3.0 % |
| 12 | A + B (10:1) | Li | EC/DMC 1:1 , 1M LiPF₆ | 1-Vinyl-2-pyrrolidinone 1.0 % |
| 13 | A + B (10:1) | Li | EC/DMC 1:1 , 1M LiPF₆ | 4-Dimethylamino-pyridine 1.0 % |
| 14 | C | Li | EC/DMC 1:1 , 1M LiPF₆ | --- |
| 15 | C | Li | EC/DMC 1:1 , 1M LiPF₆ | Pyridine 1.0 % |
| 16 | C | Li | EC/PC, 1M LiPF₆ | --- |
| 17 | C | Li | EC/PC, 1M LiPF₆ | Pyridine 2.0 % |
| 18 | D | Li | PC, 1M LiPF₆ | --- |
| 19 | D | Li | PC, 1M LiPF₆ | Pyridine 2.0 % |
| 20 | C | LoCoO₂ | EC/DMC 1:1 , 1M LiPF6 | --- |
| 21 | C | LoCoO₂ | EC/DMC 1:1 , 1M LiPF6 | Pyridine 1.0 % |
| | | | | |
| 22 | Comparison of the first cycles of three cells (no. 1, 2, and 5) | | | |

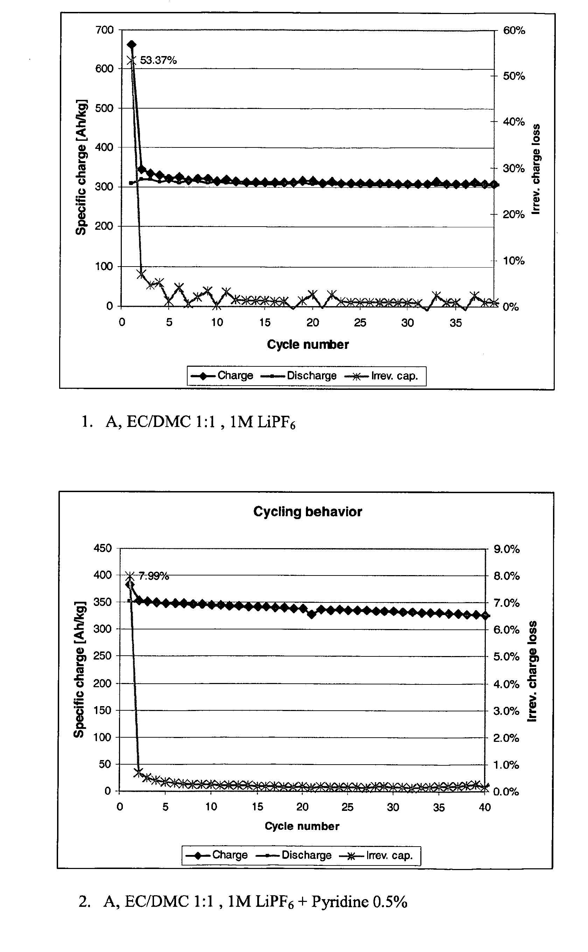

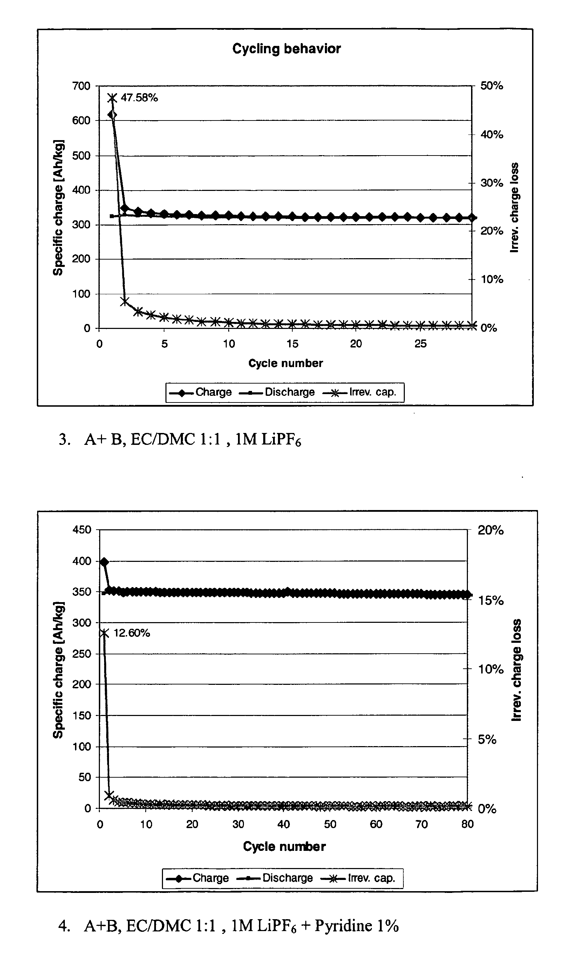

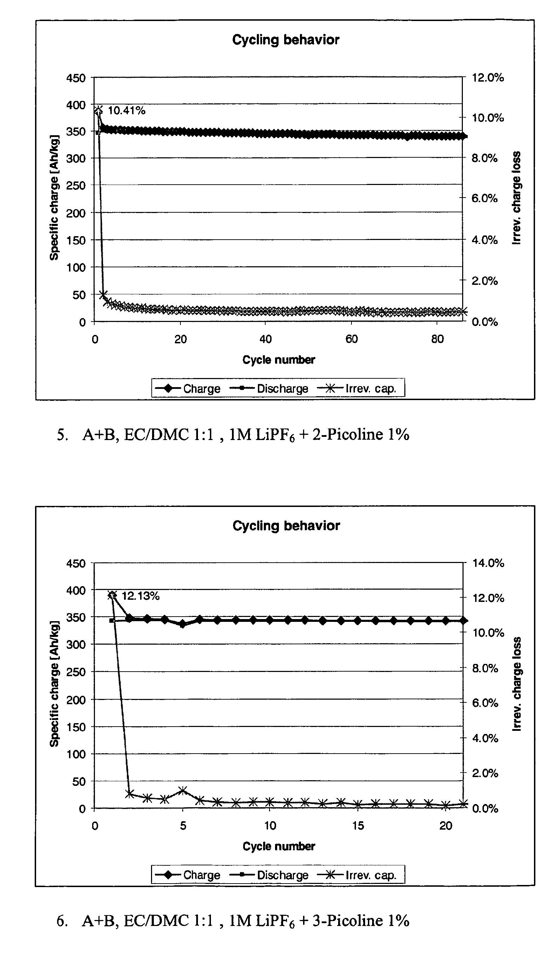

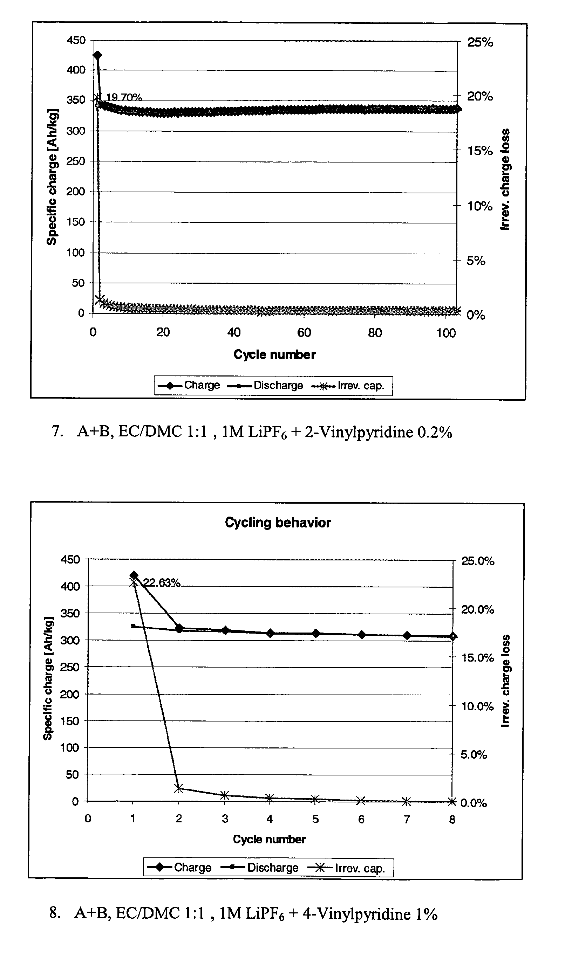

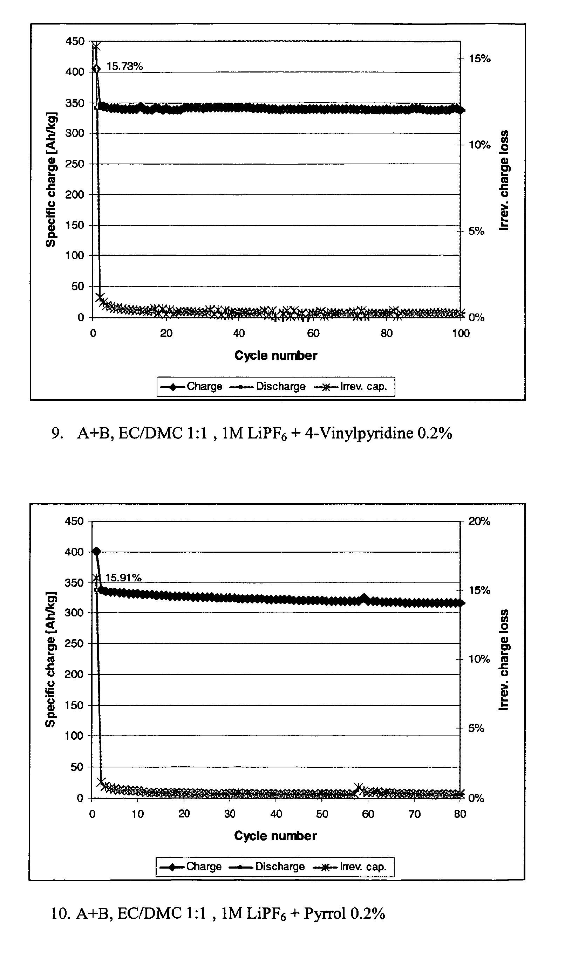

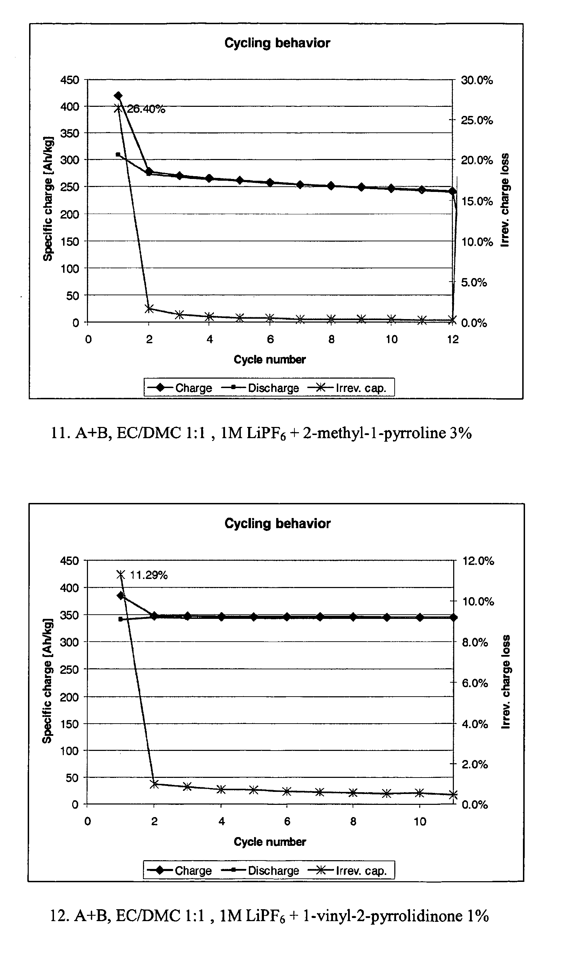

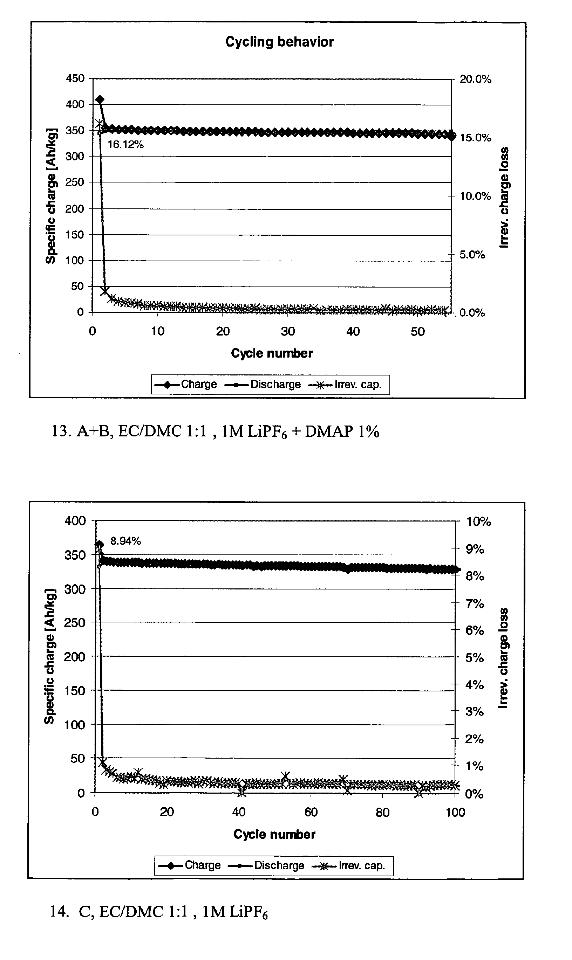

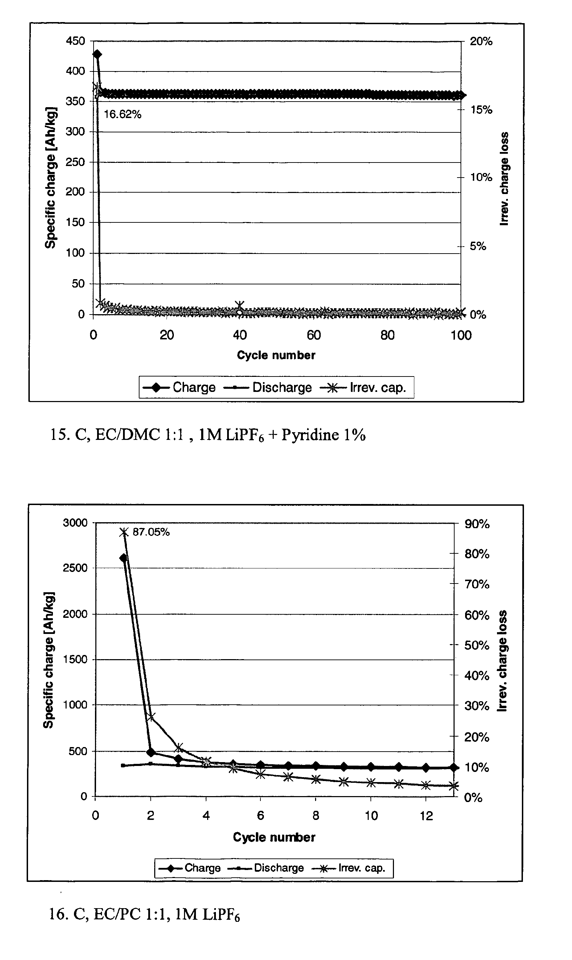

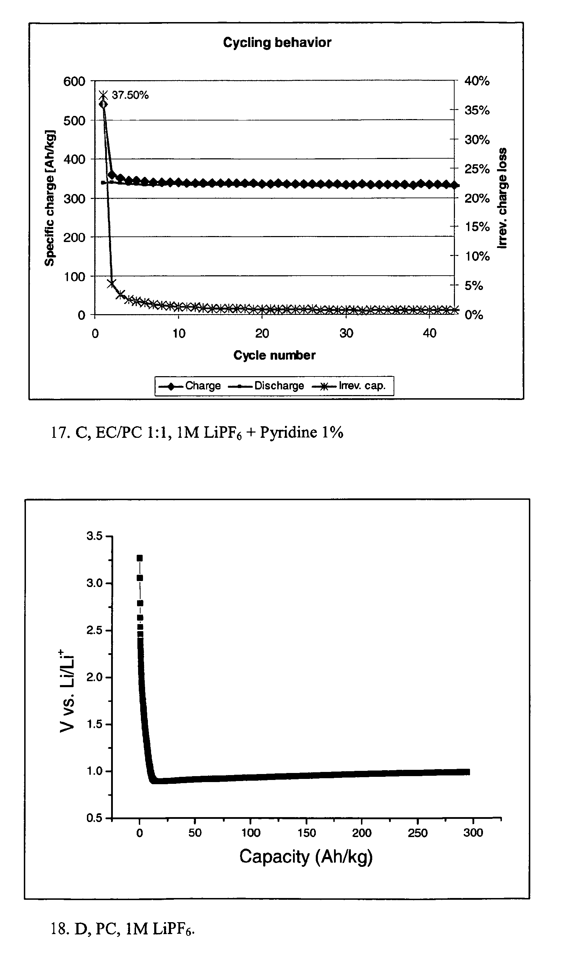

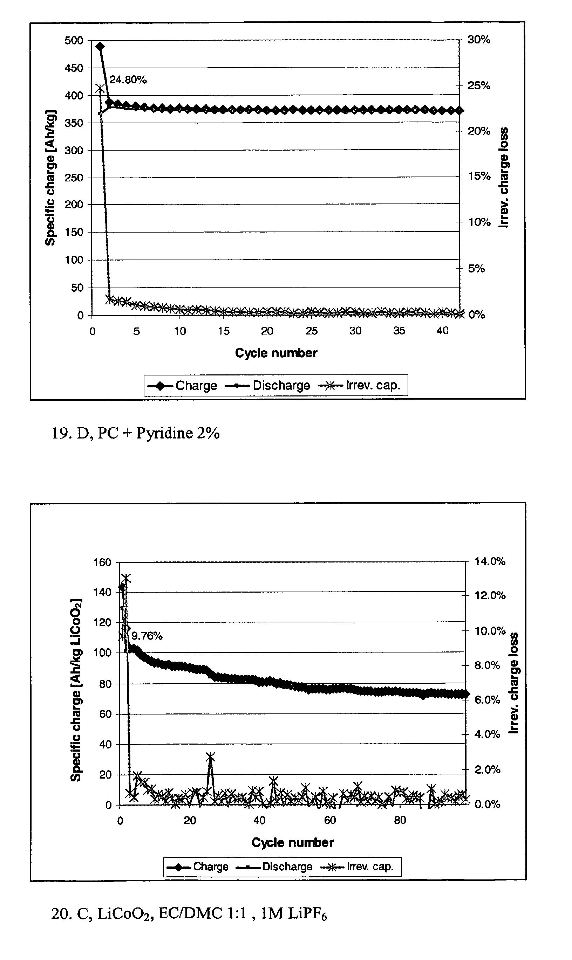

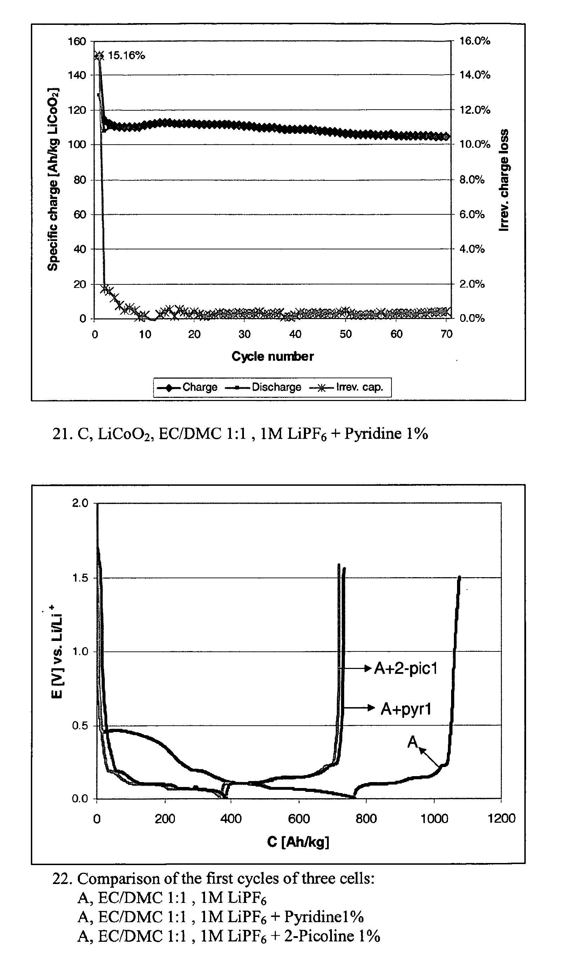

The figures 1 to 17 and 19 to 21 show with respect to the abscissa the number of charge/discharge cycles. The left ordinate gives the specific charge of the electroactive material in Ah/kg and the graph for charge and discharge cycles are the line having square symbols and rhombus symbols resp. The right ordinate gives the irreversible charge loss and the graph for this is the line having asterisk symbols.

The figures 18 and 22 show with respect to the abscissa the specific charge of the cell in Ah/kg. The ordinate gives the voltage of the cell in V vs. Li/Li⁺.

Without going too much into detail, all graphs for experiments with additives show for the specific charge a relatively constant course in the region of about 350 to 370 Ah/kg what is extraordinary in comparison to the theoretical normative value of 372 Ah/kg for graphite. Additionally, all the curves for the irreversible loss show a course generally far below 1%. Some of the extraordinary results indicate losses which are hardly to observe due to convergence of the graph with the 0%-line.

## Claims

1. A non-aqueous electrolyte for a rechargeable electrochemical cell, comprising
a) a film forming organic component;
b) an alkali metal salt; and
c) as additive a nitrogen-containing hetero-aromate and/or its derivatives and/or mixtures thereof.

2. A non-aqueous electrolyte for a rechargeable electrochemical cell, comprising
a) a film forming organic component;
b) an alkali metal salt; and
c) an additive selected from a group containing aniline, pyrrole, 2-methyl-1-pyrroline, 1-methylpyrrolidine and 1-vinyle-2-pyrrolidinone.

3. The electrolyte according to claim 1,
**characterized in that**
the nitrogen-containing aromate and/or its derivatives are selected from a group containing pyridine, 2-picoline, 3-picoline, 4-picoline, 2-alkyl-pyridine, 3-alkyl-pyridine, 4-alkyl-pyridine, 2-vinylpyridine, 4-vinylpyridine, and dimethylamino-pyridine (DMAP), and boran-pyridine-complex or mixtures thereof.

4. The electrolyte according to any of the preceding claims, **characterized in that**
the amount of the additive range from 0.05 to 10 vol%, preferably from 0.1 to 5 vol%.

5. The electrolyte according to any of the preceding claims, **characterized in that**
the film forming organic component is one or more compound selected from a group containing 1,2-dimethoxyethane, 2-methyl tetrahydrofuran, ethylene carbonate and propylene carbonate, butylene carbonate, gamma-butyro lactone, methyl propionate and methyl lactate.

6. The electrolyte according to any of the preceding claims, **characterized in that**
beside the film forming organic component an organic co-solvent is comprised, preferably selected from a group containing acyclic organic carbonates, such as dimethyl carbonate, ethyl methyl carbonate, diethyl carbonate, methyl propyl carbonate, butyl methyl carbonate or its isomers, or others, or mixtures thereof.

7. The electrolyte according to any of the preceding claims, **characterized in that**
the alkali metal salt is selected from a group containing lithium hexafluorophosphate (LiPF₆), lithium perchlorate (LiClO₄), lithium hexafluoroarsenate (LiAsF₆), lithium hexafluorostibate(LiSbF₆), lithium tetrachloroaluminate (LiAlCl₄), lithium tetrachlorogallate (LiGaCl₄), lithium nitrate (LiNO₃), lithium thiocyanate (LiSCN), lithium pentafluoroethanesulfonate (LiO₃SCF₂CF₃), lithium pentafluorobenzensulfonate (LiC₆F₅SO₃), lithium trifluoroacetate (LiO₂CCF₃), lithium fluorosulfonate (LiFSO₃), lithium tetraphenylborate (LiB(C₆H₅)₄), lithium tetrafluoroborate (LiBF₄), lithium trifluoromethanesulfonate (LiCF₃SO₃) and lithium bis(trifluoromethanesulfonyl)imide (LiN(CF₃SO₂)₂), lithium organoborates (e.g. litium-bis (oxalate)borate (LiB(C₂O₄)₂)), lithium fluoroalkyl-phosphates, or mixtures thereof.

8. The electrolyte according to claim 7,
**characterized in that**
the concentration of the lithium salt is in the range starting at 0.1 molar up to the physical solubility limit, preferably 0.5 to 2 molar.

9. The electrolyte according to any of the preceding claims, **characterized in that**
comprised are: 20 to 70 vol% of ethylene carbonate and/or 20 to 70 vol% of an acyclic carbonate, a lithium salt, preferably lithium hexafluorophoshate, in the range of 0.5 to 2 mol/l, and 0.1 to 2.5 vol% of the additive, preferably 1 vol% 2-picoline.

10. The electrolyte according to any of the preceding claims 1 to 8, **characterized in that**
comprised are: propylene carbonate, a lithium salt, preferably lithium hexafluorophosphate, in the range of 0.5 to 2 mol/l, and 0.2 to 5 vol% of the additive, preferably 2 vol% pyridine.

11. A non-aqueous electrolyte rechargeable electrochemical cell, such as an alkali metal ion accumulator, comprising an anode, a cathode and an electrolyte,
a) said anode comprises a carbonaceous electrode;
b) said cathode comprises an electroactive material containing and/or accommodating alkali metal ions;
c) said electrolyte having a composition according to any of the preceding claims 1 to 10.
